# EUROPEAN PATENT APPLICATION

(11) **EP 0 851 204 A2**
(43) Date of publication of application: **01.07.1998**
(21) Application number: 97850170.8
(22) Date of filing: 09.12.1997
(51) Int. Cl.: G01B 5/06, G01B 7/06

(54) **Arrangement for a layer thickness measurer and a method for measuring the thickness of a layer**

(30) Priority: 23.12.1996 SE 9604760
(71) Applicant: Scania CV Aktiebolag (publ), 151 87 Södertälje (SE)
(72) Inventor: Nilsson, Kent, 976 32 Lulea (SE)

(57) **Abstract**

An arrangement and a method are presented for measuring the thickness of a layer (7) by means of a layer thickness measurer (1) which incorporates a measuring device (2) which is intended to be applied to the layer whose thickness is to be measured. The arrangement incorporates means (8,9) adapted to accommodating said layer thickness measurer (1) and a film (11) which is arranged on said means and which is adapted to being situated between said measuring device (2) and the layer (7) whose thickness is to be determined.

## Description

### BACKGROUND TO THE INVENTION AND STATE OF THE ART

The present invention relates to an arrangement for a layer thickness measurer which incorporates a measuring device to be applied to a layer whose thickness is to be determined. The invention also relates to a method for measuring the thickness of a layer by means of a layer thickness measurer which incorporates a measuring device intended to be applied to the layer whose thickness is to be determined.

In for example the painting, lacquering and other forms of coating of parts and components for motor vehicles it is important that the layer applied is of the correct thickness not only for providing the sheetmetal substrate with proper protection but also to prevent the application of too much paint, lacquer or any other coating material of a cosmetic or protective nature. For example, many parts are given a coat of paint by applying paint powder to their surface and then curing the paint powder in a curing oven. The thickness of the cured paint coat is subsequently measured with a layer thickness measurer to see whether it is of the desired thickness. If such is not the case, the cured paint coat has to be removed mechanically, e.g. by blasting, before a new paint coat can be applied. This is of course a very labour-intensive and expensive procedure. The layer thickness measurers at present available do not provide exact measurements of the thickness of powder layers, since their measuring tip penetrates the powder layer in the course of the measuring operation.

There are many different forms of layer thickness measurer working on various principles, such as magnetic-induction measuring probes for measuring coatings on steel, eddy-current probes for measuring coatings on non-ferrous metals or so-called universal measuring probes for measuring coatings on all metallic materials, but a common feature of all these types of layer thickness measurer is that they incorporate a measuring device with a more or less pronounced tip intended to be applied to the layer whose thickness is to be measured. The tip-like measuring device is preferably made of some hard wear-resistant material.

### SUMMARY OF THE INVENTION

The object of the present invention is to make it possible to measure the thickness of soft layers, particularly those in powder form.

This object is achieved by the arrangement indicated in the introduction, which is characterised by means adapted to accommodating said layer thickness measurer and a film arranged on said means and adapted to being situated between said measuring device and said layer. Such a film makes it possible to distribute the compressive force with which the measuring device is applied to the layer over a larger surface so that the pressure becomes less and penetration of the measuring device into the layer can thus be prevented. It is thus possible to determine the thickness of a paint coat while the paint is still in powder form, i.e. before it is cured. If the paint powder layer is not of the desired thickness, the powder can be removed very easily and quickly and a new paint powder layer applied.

According to one advantageous embodiment of the invention the film is of substantial planar extent over at least an area substantially larger than the area of the measuring device.

According to another embodiment of the invention the means incorporates a body with a hole which is adapted to accommodating said layer thickness measurer. Such a body may thus take the form of a supplementary arrangement to a conventional layer thickness measurer. At the same time, the hole may with advantage extend through the body and the film be arranged on the body in such a way as to cover the hole. Such a design is easy to manufacture and the layer thickness measurer can easily and conveniently be inserted in the arrangement. The body may also incorporate a substantially planar forward end surface on which the film is arranged. This means that the film is supported and its planar extent can be assured. It is advantageous for the hole to have a longitudinal axis which substantially forms the perpendicular direction to the substantially planar end surface. The film may be attached by adhesive to the forward end surface.

According to a further embodiment of the invention the film is between 50 and 300 µm thick, preferably between 100 and 200 µm. It may be made of a plastic material.

The object stated above is also achieved by the method indicated in the introduction, which is characterised in that during a measuring operation a film is placed between said measuring device and said layer. In this case the layer thickness measurer may be calibrated during a calibration stage preceding the measuring operation, by the measuring device being applied directly to said substrate and zeroed. During a subsequent calibration stage preceding the measuring operation, the layer thickness measurer may be further applied to said substrate in such a manner that the film is in between and is calibrated with respect to the thickness of the film.

### BRIEF DESCRIPTION OF THE DRAWINGS

The present invention will now be explained in more detail by means of various embodiments presented as examples, with reference to the attached drawings, which are as follows:
- Fig.1: shows a side view of a layer thickness measurer according to the state of the art,
- Fig.2: shows a side view of the arrangement according to the invention with the layer thickness measurer in Fig.1 and
- Fig.3: shows a partially cutaway view of the arrangement in Fig.2, applied to a layer.

### DESCRIPTION OF VARIOUS EMBODIMENTS

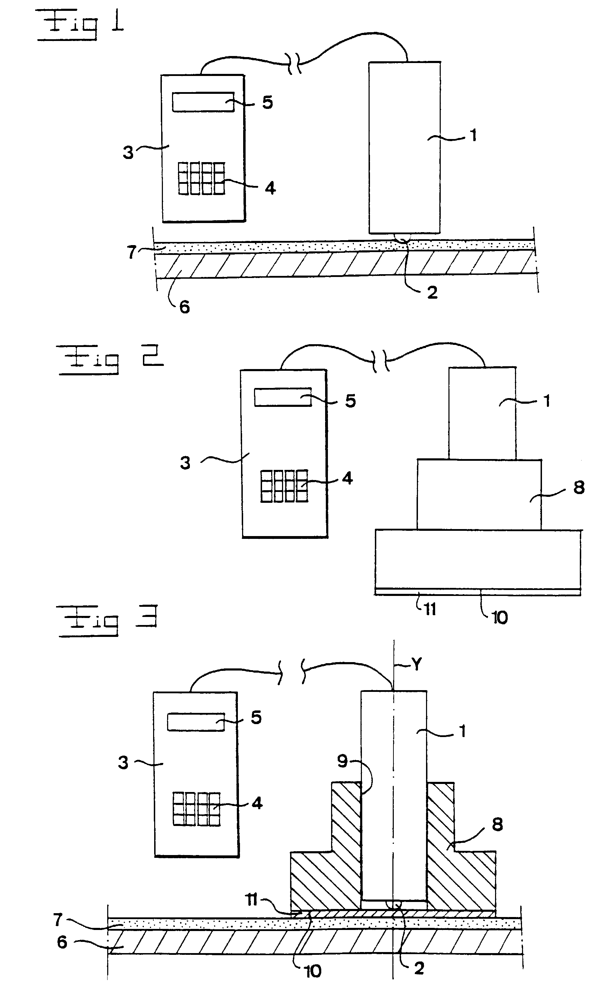

Fig.1 shows a layer thickness measurer according to the state of the art. It incorporates a so-called measuring probe 1 with a measuring device 2 which protrudes from an end surface of the measuring probe 1 and which in the embodiment depicted is substantially hemispherical in shape. The measuring device 2 is preferably made of a hard wear-resistant material and may for example incorporate a steel ball. The measuring device 2 need nevertheless not be spherical but may be of many different more or less tip-like shapes. The layer thickness measurer also incorporates a processing unit 3 to which the measuring probe 1 is connected and which incorporates necessary setting and activating devices, which are schematically represented by the keypad 4, and a display device 5 for displaying the measured result.

Fig.1 also shows a substrate 6 with a layer 7 whose thickness is to be determined. The substrate 6 in the embodiment depicted is metallic and may be of a magnetic material. The layer 7 is soft and consists in the embodiment depicted of a powder placed on the substrate 6, e.g. paint powder, which is intended, after application to the substrate 6, to be cured at an elevated temperature in a curing oven. The measuring device 2 of the measuring probe 1 is placed on the layer 7. As may be seen in Fig.1, the measuring device 2 penetrates into the layer 7, which means that the measuring result obtained will not correspond to the mean thickness of the layer.

Figs.2 and 3 depict the arrangement according to the invention. This arrangement incorporates a body 8 in the form of a sleeve through which a hole 9 extends. As may be seen in Fig.3, the body 8 is adapted to accommodating the measuring probe 1 in the hole 9. The body 8 is with advantage made of a plastic material such as nylon. The measuring probe 1 is held in position in the body 8 by a suitable fit. It is also possible to fasten the measuring probe 1 in the hole 9, e.g. by means of a screw (not depicted) extending through the body 8 into the hole 9. The hole 9 extends in a direction Y which essentially forms the perpendicular direction to a substantially planar end surface 10 of the body 8. The end surface 10 forms a front surface of the body 8, i.e. the body is moved forward in the direction Y towards the layer 7 whose thickness is to be measured.

On the substantially planar end surface 10, a thin film 11 is arranged in such a way as to cover substantially the whole end surface 10 and the hole 9. The film 11 is made of some suitable plastic material and fastened to the end surface 10 by means of some suitable fastening means, e.g. an adhesive. The film 11 may also be fused together with the body 8. The relatively thin film 11 is between 50 and 300 µm thick, preferably between 100 and 200 µm, e.g. 150 µm.

As may be seen in Fig.3, the film 11, as viewed in the direction Y, also has a substantially planar extent over an area which is very substantially larger than the area of the measuring device 7 as viewed in the direction Y. When the measuring probe 1 with the body 8 according to the invention is applied to a layer 7 whose thickness is to be determined, the film 11 will thus be situated between the measuring device 2 and the layer 7. The planar and relatively large surface extent of the film 11 means that indentation of the layer 7 will not be caused even by fairly large application forces. Measurement by means of the depicted measuring probe 1 with the film 11 will thus provide a value for the thickness of the layer 7 plus the thickness of the film 11. As the thickness of the film 11 is known, the thickness of the layer 7 will be easy to determine, e.g. by means of the processing unit 3.

A proper measuring procedure in accordance with the present invention may be described as follows. During a first calibration stage the measuring probe 1 is applied directly to the substrate 6 without any interposed film 11. At this stage the layer thickness measurer is zeroed by means of the setting device 4. The display device 5 will thus display a value of nil. During a subsequent calibration stage the measuring probe 1 with the film 11 is applied directly to said substrate in such a way that the film 11 is situated between the substrate 6 and the measuring device 2. This time, the layer thickness measurer is calibrated with respect to the film 11, i.e. the setting device 4 is used to set the layer thickness measurer so that the display device 5 displays the value which corresponds to the thickness of the film. Thereafter the measuring probe 1 with the film 11 is applied to a layer 7 whose thickness is to be determined. It should be noted that a paint powder layer will be thicker than the paint coat which results from the curing of the paint powder layer. As this change in thickness can be predetermined for different powder mixes and powder grades, it is very easy to compensate for in determining the thickness of the final paint coat.

It should be noted that the present invention is in no way limited to any particular type of measuring probe but is applicable in conjunction with most types known at present, such as magnetic-induction measuring probes, eddy-current probes, universal probes etc.

The present invention is not limited to the embodiments depicted but may be varied and modified within the scope of the patent claims below. For example, the invention is not only applicable for measuring layers in the form of powder but may also be used for determining the thickness of every conceivable soft non-rigid layer.

## Claims

1. Arrangement for a layer thickness measurer (1) which incorporates a measuring device (2) which is intended to be applied to a layer (7) whose thickness is to be determined, characterised by means (8,9) adapted to accommodate said layer thickness measurer (1) and a film (11) which is arranged on said means and which is adapted to being situated between said measuring device (2) and said layer (7).

2. Arrangement according to claim 1, characterised in that the film (11) is of substantially planar extent over at least an area which is substantially larger than the area of the measuring device (2) .

3. Arrangement according to claim 2, characterised in that said means incorporates a body (8) with a hole (9) which is adapted to accommodating said layer thickness measurer (1).

4. Arrangement according to claim 3, characterised in that the hole (9) extends through the body (8) and that the film (11) is arranged on the body (8) in such manner that it covers the hole (9) .

5. Arrangement according to either of claims 3 and 4, characterised in that said body (8) incorporates a substantially planar front end surface (10) on which the film (11) is arranged.

6. Arrangement according to any one of claims 3 to 5, characterised in that said hole (9) has a longitudinal axis (Y) which substantially forms the perpendicular direction to the substantially planar end surface (10).

7. Arrangement according to either of claims 5 and 6, characterised in that the film (11) is made of a plastic material and is attached adhesively to the front end surface (10).

8. Arrangement according to any one of the foregoing claims, characterised in that the film (11) is between 50 and 300 µm thick, preferably between 100 and 200 µm.

9. Method for measuring the thickness of a layer by means of a layer thickness measurer which incorporates a measuring device which is intended to be applied to the layer whose thickness is to be measured, characterised in that during the measuring operation a film is placed between said measuring device and said layer.

10. Method according to claim 9 whereby the layer is situated on a substrate, characterised in that during a calibration stage preceding the measuring operation the layer thickness measurer is calibrated by the measuring device being applied directly to said substrate and being zeroed.

11. Method according to claim 10, characterised in that during a subsequent calibration stage preceding the measuring operation the layer thickness measurer is applied to said substrate in such manner that the film is situated in between and is calibrated with respect to the thickness of the film.
